# EUROPÄISCHE PATENTSCHRIFT

(11) **EP 2 568 206 B1**
(45) Veröffentlichungstag und Bekanntmachung des Hinweises auf die Patenterteilung: **21.01.2015**
(21) Anmeldenummer: 11180384.7
(22) Anmeldetag: 07.09.2011
(51) Int. Cl.: F16L 13/14

(54) **Verbindungsanordnung**
Connection assembly
Dispositif de raccordement

(43) Veröffentlichungstag der Anmeldung: 13.03.2013
(73) Patentinhaber: Geberit International AG, 8645 Jona (CH)
(72) Erfinder: Gisler, Marcello, 6472 Erstfeld (CH); Rüesch, Thomas, 8808 Pfäffikon (CH)
(74) Vertreter: Frischknecht, Harry Ralph

(56) Entgegenhaltungen:
- WO-A1-00/15995
- WO-A1-02/23070
- DE-U1- 8 913 722

## Beschreibung

### TECHNISCHES GEBIET

Die vorliegende Erfindung betrifft eine Verbindungsanordnung zur Verbindung eines Fittings mit einem Rohrstück nach dem Oberbegriff von Anspruch 1.

### STAND DER TECHNIK

Verbindungen zwischen Fittings und fluidführenden Rohren sind aus dem Stand der Technik bekannt. Beispielsweise zeigt die EP 0 513 292 eine solche Verbindung. Dabei wird zwischen einem Flansch des Fittings und der Stirnseite des Rohres ein Dichtungselement in der Gestalt eines O-Rings angeordnet, welcher die Dichtungseigenschaften der Rohrverbindung verbessern soll.

Weitere Dichtungskonfigurationen sind aus der DE 89 13 722 U und der WO 00/15995 bekannt geworden. Es werden quellfähige Dichtungen gezeigt, welche bezüglich der Dichtwirkung nachteilig sind.

In der Praxis hat es sich aber erwiesen, dass die Rohre vielfach schräg geschnitten werden, so dass die Stirnfläche nicht senkrecht sondern in einem Winkel zur Mittelachse des Rohres steht. Folglich kann die Situation eintreten, dass die Stirnfläche nicht vollflächig mit dem Dichtungselement in Kontakt steht. Folglich entsteht zwischen Stirnfläche und Dichtungselement ein Spalt, in welchen Flüssigkeit, wie beispielsweise Betonmilch beim Vergiessen des Rohrers mit Beton oder Wasser im Betrieb, eindringen kann. Durch diesen Flüssigkeitseintritt können die metallischen Teile eines Verbundrohres korrodieren, was die Verbindung zwischen Rohr und Fitting negativ beeinflusst.

In der Praxis ist man dazu übergegangen, das Fitting mit einem Tuch oder Dichtstreifen zu bandagieren, um das Problem zu lösen. Allerdings hat das Bandagieren den Nachteil, dass dieses sehr zeitaufwändig ist und das Problem des Eindringens nach wie vor besteht, weil durch die Bandage ebenfalls Wasser hindurchtreten kann. Weiter muss das Rohr zum Anbringen der Bandage jeweils angehoben werden, was zu Brüchen oder Knicken im Rohr bzw. den Fittings führen kann, wodurch mögliche Lecks entstehen können.

### DARSTELLUNG DER ERFINDUNG

Ausgehend von diesem Stand der Technik liegt der Erfindung eine Aufgabe zugrunde, eine Verbindungsanordnung anzugeben, welche, insbesondere bei schräg geschnittenen Rohrenden, eine verbesserte Dichtung zwischen Fitting und Stirnseite des Rohrs aufweist.

Eine solche Aufgabe löst ein Rohrverbindungssystem nach Anspruch 1. Demgemäss umfasst ein Rohrverbindungssystem ein sich entlang einer Mittelachse erstreckendes Rohr mit einer eine Innenfläche und eine Aussenfläche aufweisenden Seitenwand, die einen Kanal begrenzt, wobei in axialer Richtung die Seitenwand durch Stirnflächen begrenzt ist, und ein sich entlang der Mittelachse ersteckendes Fitting mit einer eine Innenfläche und eine Aussenfläche aufweisenden Seitenwand, und einem von der Aussenfläche abstehenden Flansch, wobei die Innenfläche einen sich durch den Fitting erstreckenden Kanal begrenzt. Das Fitting ragt teilweise in das Rohr hinein und das Rohr steht mit diesem Fitting in Verbindung, wobei zwischen der Stirnfläche des Rohres und dem Flansch des Fittings ein Dichtungselement angeordnet ist. Das Dichtungselement umfasst einen Dichtungsabschnitt und einen Quellabschnitt, wobei der Dichtungsabschnitt gegen die Stirnfläche des Rohrs gerichtet ist und aus einem bezüglich Fluiden undurchlässigen Material besteht, und wobei der Quellabschnitt gegen den Flansch gerichtet ist und aus einem quellfähigen Material besteht, welches bei Kontakt mit einer Flüssigkeit aufquellbar ist und durch das Aufquellen am Flansch ansteht und dadurch eine Kraft in Richtung der Mittelachse auf den Dichtungsabschnitt bereitstellt, so dass der Dichtungsabschnitt gegen die Stirnfläche des Rohrs pressbar ist. Folglich wird das Dichtungselement bei Eintritt bzw. bei Vorhandensein einer Flüssigkeit zur Stirnfläche hin bewegt und kommt direkt mit der Stirnseite in Kontakt. Mit anderen Worten kann auch gesagt werden, dass der Dichtungsabschnitt durch das Aufquellen des Quellabschnittes gegen die Stirnseite des Rohrs gepresst wird. Somit wird verhindert, dass die Stirnfläche des Rohres weiterhin mit Flüssigkeiten in Kontakt kommt und somit die metallischen Teile des Rohrs korrodieren.

Vorzugsweise ist das Dichtungselement einstückig aus dem Dichtungsabschnitt und dem Quellabschnitt ausgebildet. Folglich besteht das Dichtungselement im Wesentlichen aus den beiden Abschnitten und es ist besonders einfach montierbar.

Das Dichtungselement ist vorzugsweise als Dichtungsscheibe mit einer zentralen Öffnung ausgebildet, wobei der Aussendurchmesser der Dichtungsscheibe vorzugsweise gleich gross oder grösser ist, als der Aussendurchmesser des Rohrs. Somit wird sichergestellt, dass die gesamte Stirnfläche nach aussen hin mit dem Dichtungselement überdeckt wird.

Vorzugsweise ist das Dichtungselement derart angeordnet, dass der Dichtungsabschnitt im vollflächigen Kontakt mit der Stirnseite ist.

Vorzugsweise weist der Dichtungsabschnitt in Richtung der Mittelachse gesehen im Wesentlichen die gleiche Form bzw. Gestalt auf, wie die Stirnfläche, wobei die Stirnfläche in Richtung der Mittelachse gesehen vollständig durch den Dichtungsabschnitt überdeckt ist.

Das Dichtungselement ist vorzugsweise mit einem Sicherungselement gegen eine axiale Verschiebung in Richtung der Mittelachse auf dem Fitting gesichert. Dichtungselement und Fitting bilden somit eine Einheit. Vorzugsweise weist das Sicherungselement die Gestalt einer umlaufenden Nut auf, welche sich von der Aussenfläche in die Seitenwand des Fittings hinein erstreckt. Alternativ wird das Sicherungselement durch eine Klemmverbindung zwischen der Aussenfläche des Fittings und der Öffnung im Dichtungselement bereitgestellt, wobei der Durchmesser der Öffnung im Dichtungselement kleiner ist als der Durchmesser der Aussenfläche des Fittings im entsprechenden Bereich.

Vorzugsweise wird das Rohr zum Fitting über eine Pressverbindung verbunden, oder das Rohr ist zum Fitting über eine Bride oder eine Presshülse verbunden.

Vorzugsweise ist das Rohr ein Verbundrohr, welches aus einer inneren Lage aus Kunststoff und einer sich über die innere Lage erstreckenden mittleren Lage aus Metall besteht, wobei die mittlere Lage mit einer äusseren Lage aus Kunststoff überdeckt ist. Das Dichtungselement aus dem Dichtungsabschnitt und dem Quellabschnitt überdeckt im Falle des Verbundrohres die Stirnfläche, bei welcher entsprechende metallische Abschnitt frei liegen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Ansicht eines Ausführungsbeispiels eines Rohrverbindungssystems gemäss der vorliegenden Verbindung im Ausgangszustand; und
- Fig. 2: das Rohrverbindungssystem nach Fig. 1 bei Einwirkung von Feuchtigkeit.

### BESCHREIBUNG BEVORZUGTER AUSFÜHRUNGSFORMEN

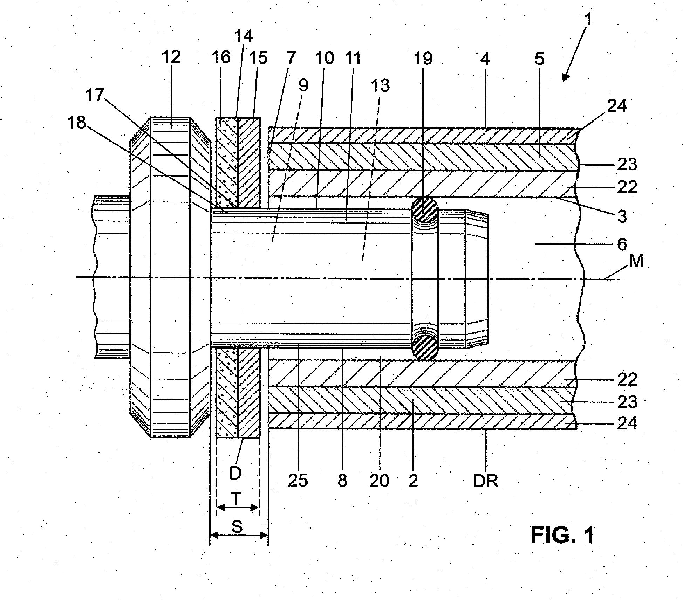

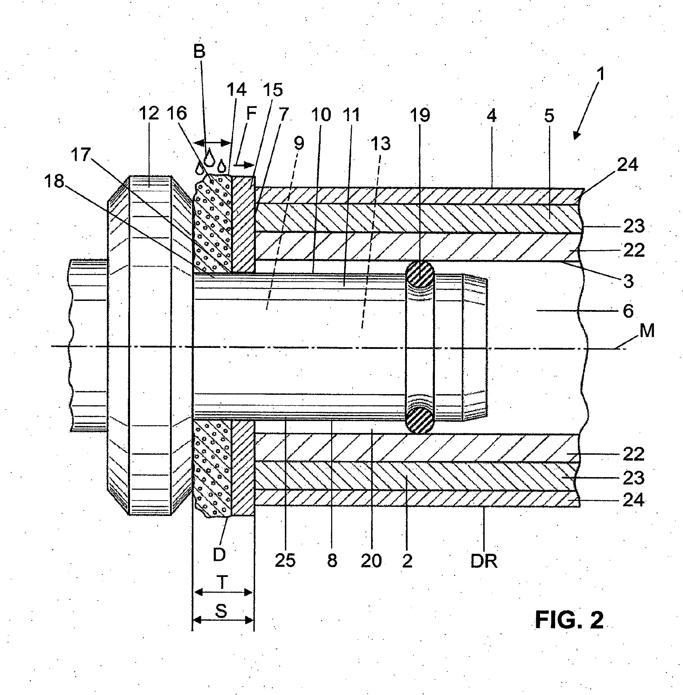

Die Fig. 1 zeigt einen Ausschnitt eines Rohrverbindungssystems 1 im Ausgangsszustand und die Fig. 2 zeigt das Rohrverbindungssystem bei Einwirkung von Feuchtigkeit, wie Wasser oder Betonmilch B. Das Rohrverbindungssystem 1 umfasst im Wesentlichen ein Rohr 2 und ein mit dem Rohr 2 in Verbindung stehendes Fitting 8. Das Fitting 8 dient der Verbindung von zwei benachbarten Rohren bzw. von einem Rohr mit einer entsprechenden Armatur. Das Fitting 8 erstreckt sich dabei in das Rohr 2 hinein. Weiter ist im Bereich der Stirnfläche 7 des Rohrs 2 ein Dichtungselement 14 angeordnet und kann auch als Teil des Rohrverbindungssystems 1 betrachtet werden.

Das Rohr 2 erstreckt sich entlang einer Mittelachse M und weist eine Seitenwand 5 auf, die einen Kanal 6 begrenzt. Die Seitenwand 5 weist eine Innenfläche 3, die dem Kanal 6 zugewandt ist, und eine Aussenfläche 4 auf. In axialer Richtung ist die Seitenwand 5 bzw. das Rohr 2 durch Stirnflächen 7 begrenzt. Vorzugsweise ist das Rohr 2 rotationssymmetrisch um die Mittelachse M ausgebildet und weist somit einen kreisrunden Querschnitt auf. Der Kanal 6 dient im Wesentlichen der Führung eines Fluides, wie beispielsweise Wasser oder Luft, und in den Endbereichen nahe der Stirnflächen 7 bzw. im Bereich des Rohrendes der Aufnahme von Teilen des Fittings 8.

Das Fitting 8 erstreckt sich ebenfalls entlang der Mittelachse M und umfasst eine Seitenwand 11, von welcher ein Flansch 12 absteht. Die Seitenwand weist eine Innenfläche 9 und eine Aussenfläche 10 auf. Die Innenfläche 9 begrenzt einen Kanal 13, welcher sich durch das Fitting 8 hindurch erstreckt. Der Kanal 13 bildet damit eine Fortsetzung des Kanals 6 des Rohres 2, wodurch das Fluid vom Kanal 6 in den Kanal 13 und somit durch das Fitting 8 gelangen kann. Das Fitting 8 dient der Verbindung von zwei Rohren 2 oder der Verbindung eines Rohres 2 mit einer anderen Armatur oder Vorrichtung.

Der Flansch 12 ist hier mittig bezüglich der Mittelachse M am Fitting 8 angeordnet. In den Figuren ist bezüglich des Flansches 12 gesehen lediglich der rechte Teil des Fittings gezeigt. Der linke Teil des Fittings, welcher sich vom Flansch 12 nach links erstreckt, kann dabei identisch zum rechten Teil ausgebildet sein. Der Flansch 12 erstreckt sich umlaufend um die Aussenfläche 10 des Fittings 8 und weist einen gleichen oder einen grösseren Aussendurchmesser als die Seitenwand 11 auf.

Wie von den Figuren erkannt werden kann, ragt das Fitting teilweise in das Rohr 2 hinein und das Rohr 2 steht mit diesem Fitting 8 fest in Verbindung. Der Bereich des Fittings 8, welcher in das Rohr 2 hineinragt, kann als Verbindungsabschnitt 25 bezeichnet werden. Zwischen der Stirnfläche 7 des Rohres 2 und dem Flansch 12 des Fittings 8 ist das Dichtungselement 14 angeordnet. Das Dichtungselement 14 soll mit der Stirnfläche 7 des Rohres 2 in Kontakt stehen, um eine Dichtwirkung bereitzustellen, so dass keine Flüssigkeit zwischen Dichtungselement 14 und Rohr 2 gelangen kann. Somit wird die Stirnfläche 7 bezüglich Flüssigkeiten zur Umwelt hin abgedichtet, womit Korrosion von metallischen Bestandteilen des Rohrs verhindert wird. Die Verhinderung von Korrosion ist sehr wichtig, denn anderenfalls könnte es zu einem Austritt von im Kanal 6 bzw. 13 geführten Fluiden kommen.

Das Dichtungselement 14 umfasst einen Dichtungsabschnitt 15 und einen Quellabschnitt 16. Das Dichtungselement 14 ist dabei derart in den Zwischenraum zwischen Flansch und Stirnfläche 7 eingebaut, dass der Dichtungsabschnitt 15 gegen die Stirnfläche 7 des Rohres 2 gerichtet ist und dass der Quellabschnitt 16 gegen den Flansch 12 des Fittings 8 gerichtet ist. Der Dichtungsabschnitt 15 steht dabei in Kontakt mit der Stirnfläche 7 des Rohrs 2.

Der Dichtungsabschnitt 15 besteht aus einem bezüglich Fluiden undurchlässigen Material, wie beispielsweise Gummi. Durch die Anordnung dieses Dichtungsabschnittes 14 aus dem undurchlässigen Material kann somit keine Flüssigkeit zur Stirnfläche 7 des Rohres 2 gelangen, wenn der Dichtungsabschnitt 15 auf der Stirnfläche 7 aufliegt. Folglich dichtet das Dichtungselement 14 mit dem Dichtungsabschnitt 15 die Stirnfläche 7 des Rohres entsprechend ab. Vorzugsweise weist der Dichtungsabschnitt 15 in Richtung der Mittelachse M die gleiche Form auf, wie die Stirnfläche 7 des Rohres 2 und überdeckt die Stirnfläche 7 vollständig. Wie in den Figuren gezeigt kann dabei der Dichtungsabschnitt 15 flächenmässig auch grösser als die Stirnfläche 7 ausgebildet sein, wobei sich der Dichtungsabschnitt 15 dann über den Aussendurchmesser DR des Rohrs 2 erstreckt. Der Aussendurchmesser DR des Rohrs 2 liegt vorzugsweise in einem Bereich von 8 mm bis 75 mm.

Vorzugsweise weist der Dichtungsabschnitt 15 eine Shore-Härte im Bereich von 75 bis 85 Sh-A auf.

Der Quellabschnitt 16 besteht aus einem quellfähigen Material, welches bei Kontakt mit einer Flüssigkeit B aufquillt. Unter der Ausdrucksweise aufquellen wird hier verstanden, dass sich das Volumen des Quellabschnittes 16 bei Kontakt mit einer Flüssigkeit, wie beispielsweise Wasser oder Betonmilch, entsprechend vergrössert. Diese Vergrösserung unter Einwirkung der Flüssigkeit B wird in der Fig. 2 gezeigt und kann ein Vielfaches des Ausgangsvolumens betragen. Unter einem Vielfachen wird in diesem Zusammenhang 100% bis 300%, insbesondere 200% bis 250%, verstanden. Durch das Aufquellen des Quellabschnittes 16 steht das Dichtungselement 14 am Flansch 12 an und dadurch wird eine Kraft F in Richtung der Mittelachse M bereitgestellt, womit der Dichtungsabschnitt 16 gegen die Stirnfläche 7 des Rohres 2 gepresst wird. Mit anderen Worten kann auch gesagt werden, dass durch die Volumenvergrösserung der Dichtungsabschnitt 15 gegen die Stirnfläche 7 bewegt wird und auch gegen die Stirnfläche 7 gepresst wird. Folglich wird ein allfälliger Zwischenraum zwischen dem Dichtungselement 14 bzw. dem Dichtungsabschnitt 15 und der Stirnfläche 7 des Rohres durch das Aufquellen des Quellabschnittes 16 aufgehoben, wodurch das Dichtungselement 14 umlaufend an der Stirnfläche 7 anliegt. Der Quellabschnitt 16 besteht vorzugsweise aus einem Polymer, welches vorzugsweise ionisierbare Gruppen bzw. vorzugsweise Polyelektrolytnetzwerke umfasst, die die Flüssigkeit aufnehmen und so dem Quellabschnitt 16 aufquellen bzw. ausdehnen lassen. Der Quellabschnitt 16 interagiert also mit der Flüssigkeit und somit wird das Volumen des Quellabschnittes 16 entsprechend vergrössert.

Bezüglich des Quellabschnittes 16 wird hier angemerkt, dass die Quellung bezüglich des Volumens über den Durchmesser verteilt unregelmässig erfolgen kann. Folglich wird sichergestellt, dass der Dichtungsabschnitt 15 auch bei winklig bzw. schräg zur Mittelachse M abgeschnittenen Rohren 2 an die Stirnfläche 7 gepresst wird. Bei diesen schräg abgeschnittenen Rohren steht die Stirnfläche 7 winklig zur Mittelachse M.

Der Quellabschnitt 16 weist vorzugsweise eine Shore-Härte im Bereich von 85 bis 95 Sh-A auf.

Die Anordnung des Dichtungsabschnittes 15 aus dem oben beschriebenen bezüglich Flüssigkeiten undurchlässigen Material hat den Vorteil, dass der Quellabschnitt 16 nicht im Kontakt mit der Stirnfläche 7 steht und somit keine Dichtungsfunktion aufweisen muss.

Das Dichtungselement 14 ist vorzugsweise einstückig aus dem Dichtungsabschnitt 15 und dem Quellabschnitt 16 ausgebildet. Vorzugsweise werden Dichtungsabschnitt 15 und Quellabschnitt 16 koextrudiert und gegebenenfalls ausgestanzt. Alternative Herstellvarianten sind auch denkbar.

Im ungequellten Zustand weist der Dichtungsabschnitt 15 eine Dicke auf, welche 50% bis 75%, besonders bevorzugt 66.6%, der gesamten Dicke T des Dichtungselementes 14 entspricht, und der Quellabschnitt weist eine Dicke im Bereich von 25% bis 50%, besonders bevorzugt von 33.3%, auf.

Das Dichtungselement 14 ist in der vorliegenden Ausführungsform als Dichtungsscheibe ausgebildet und weist eine zentrale Öffnung 17 auf. Die zentrale Öffnung 17 erstreckt sich vollständig durch das Dichtungselement 14 hindurch. Im eingebauten Zustand ragt der Fitting 8 durch diese zentrale Öffnung 17 hindurch. Der Aussendurchmesser D der Dichtungsscheibe ist vorzugsweise gleich gross oder grösser als der Aussendurchmesser DR des Rohres 2, während der Durchmesser der zentralen Öffnung 17 im Wesentlichen dem Aussendurchmesser des Fittings 8 in dem Bereich, in welchem das Fitting 8 zu liegen kommt, entspricht. Somit wird sichergestellt, dass das Dichtungselement vollständig die Stirnfläche 7 des Rohrs 2 überdeckt

Das Dichtungselement 14 weist vorzugsweise eine Dicke T auf, welche im ungequellten Zustand kleiner oder gleich gross ist wie der minimale Spalt S zwischen der Stirnfläche des Rohres 2 und dem Flansch 12 des Fittings 8. Mit anderen Worten kann auch gesagt werden, dass die Dicke T des Dichtungselementes 14 zugleich auch der minimale Spalt S zwischen Stirnfläche 7 und Flansch 12 definiert. Bei der Anwendung einer entsprechenden Kraft beim Zusammenstecken von Rohr 2 und Fitting 8 kann das Dichtungselement 14 vorzugsweise leicht komprimiert werden, wodurch bereits vor Vorhandensein einer Flüssigkeit sichergestellt werden kann, dass der Dichtungsabschnitt 15 an der Stirnfläche 7 anliegt.

Das Dichtungselement 14 ist vorzugsweise mit einem Sicherungselement 18 gegen eine axiale Verschiebung in Richtung der Mittelachse M auf dem Fitting 8 gesichert. Fitting 8 und Dichtungselement 14 bilden somit eine gemeinsame Einheit. Das Sicherungselement 18 hat dabei den Vorteil, dass das Dichtungselement 14 auf dem Fitting vormontiert werden kann. Diese Vormontage ist für den Installateur vorteilhaft, da somit sichergestellt werden kann, dass das Dichtungselement 14 immer mit der korrekten Orientierung, also mit dem Dichtungsabschnitt 15 gegen die Stirnfläche 7 gerichtet auf dem Fitting angeordnet ist.

Das Sicherungselement 18 kann beispielsweise die Gestalt einer umlaufenden Nut aufweisen, welche sich von der Aussenfläche 10 in die Seitenwand des Fittings 8 hineinerstreckt. Dabei rastet das Dichtungselement in diese Nut ein und wird von dieser Nut gehalten, so dass eine Verschiebung in Richtung der Mittelachse M nicht möglich ist.

Alternativ kann das Sicherungselement 18 auch durch eine Klemmverbindung zwischen der Aussenfläche 10 des Fittings 8 und der Öffnung 17 im Dichtungselement 14 bereitgestellt werden. Vorzugsweise ist dabei der Durchmesser der Öffnung 17 im Dichtungselement 14 kleiner als der Durchmesser der Aussenfläche des Fittings 8 im entsprechenden Bereich.

In weiteren Ausführungsformen wäre es auch denkbar, dass das Sicherungselement 18 durch eine stoffschlüssige Verbindung zwischen Dichtelement 14 und Fitting 8 bereitgestellt wird. Es wäre beispielsweise denkbar, Dichtungselement 14 und Fitting 8 in einem Spritzgussvorgang herzustellen, wobei das Dichtungselement 14 dann in die Spritzgussform eingelegt werden kann.

Von den Figuren kann weiter erkannt werden, dass ein weiteres Dichtungselement 19 zwischen der Innenfläche 3 des Rohres 2 und der Aussenfläche 10 des Fittings 8 vorgesehen ist. Dieses Dichtungselement 19 dichtet den Ringspalt 20 zwischen besagter Innenfläche 3 und besagter Aussenfläche 10 bezüglich Fluiden ab. Somit kann also ein im Kanal 6 geführtes Fluid nicht in diesen Ringspalt 20 eintreten. Das weitere Dichtungselement 19 ist in einer sich in das Fitting 8 erstreckende Nut 21 entsprechend gelagert. Hier hat das weitere Dichtungselement 19 die Gestalt eines O-Ringes.

Das Rohr 2 ist zum Fitting 8 bevorzugt über eine Pressverbindung verbunden. Dabei wird mit einem Werkzeug eine Kraft auf die Aussenfläche 4 des Rohres 2 ausgeübt, so dass das Rohr im Bereich des Verbindungsabschnittes 25 entsprechend gegen das Fitting 8 gepresst wird. Das Rohr 2 wird in diesem Bereich irreversibel verformt und dadurch kann eine feste Verbindung zwischen Rohr 2 und Fitting 8 bereitgestellt werden. Alternativ kann diese Kraft auch über eine Bride oder eine entsprechende Presshülse aufgebracht werden, wobei die Bride bzw. die Presshülse sich über die Aussenfläche 4 des Rohres im Bereich des Verbindungsabschnittes 25 erstrecken.

Das Rohr 2 ist vorzugsweise ein Verbundrohr mit metallischen Bestandteilen. Hier umfasst das Rohr 2 eine innere Lage 22, einer sich der inneren Lage anschliessenden mittlere Lage 23 und eine sich der mittleren Lage 23 anschliessenden äussere Lage 24. Die mittlere Lage 23 erstreckt sich dabei vollständig um die innere Lage 22 und die äussere Lage 24 erstreckt sich vollständig über die mittlere Lage 23. Die innere Lage 22 und die äussere Lage 24 sind vorzugsweise aus Kunststoff, während die mittlere Lage 23 aus einem metallischen Werkstoff besteht. Mit anderen Worten kann gesagt werden, dass die mittlere Lage 23 aus dem metallischen Werkstoff vollständig durch die innere Lage 22 und die äussere Lage 24 überdeckt ist. Abgesehen dem Bereich der Stirnfläche 7. Gerade bei Verbundrohren trat das Problem der Korrosion dieser metallischen Teile auf. Diese Korrosion wird, wie oben bereits beschrieben, mit dem Dichtungselement 14 und seinem Dichtungsabschnitt 15 verhindert, weil der Dichtungsabschnitt 15 sich nun über die entsprechenden metallischen Bestandteile des Verbundrohres erstreckt.

Das Fitting 8 kann beispielsweise aus Kunststoff oder aus Metall, wie Messing, bereitgestellt werden. Wenn das Fitting 8 aus einem unterschiedlichen metallischen Werkstoff als die metallischen Bestandteile des Rohrs 2 besteht, so besteht das Risiko der elektrochemischen Korrosion zwischen dem Fitting 8 und den metallischen Bestandteilen des Rohres 2. Das Dichtungselement verhindert somit eine elektrochemische Reaktion aufgrund der Unterschiede in der Spannungsreihe zwischen Aluminium und Messing. Somit wird also die elektrochemische Spannungskorrosion zwischen dem Fitting 8 und dem Rohr 2 verhindert.

Zusammenfassend kann hier festgehalten werden, dass die Anordnung des Dichtungselementes 14 mit dem Dichtungsabschnitt 15 und dem Quellabschnitt 16 den Vorteil hat, dass es weniger Schadenfälle im Betrieb gibt, dass eine einfache Montage der Verbindung zwischen dem Fitting 8 und dem Rohr 2 ermöglicht wird, und dass es zu keinen Brüchen während der Installation kommt, weil die Bandagierung entsprechend entfällt.

**BEZUGSZEICHENLISTE**

| | | | |
|---|---|---|---|
| 1 | Rohrverbindungssystem | 18 | Sicherungselement |
| 2 | Rohr | 19 | weiteres Dichtungselement |
| 3 | Innenfläche | 20 | Ringspalt |
| 4 | Aussenfläche | 21 | Nut |
| 5 | Seitenwand | 22 | innere Lage |
| 6 | Kanal | 23 | mittlere Lage |
| 7 | Stirnfläche | 24 | äussere Lage |
| 8 | Fitting | 25 | Verbindungsabschnitt |
| 9 | Innenfläche | | |
| 10 | Aussenfläche | M | Mittelachse |
| 11 | Seitenwand | D | Aussendurchmesser Dichtungselement |
| 12 | Flansch | | |
| 13 | Kanal | DR | Aussendurchmesser Rohr |
| 14 | Dichtungselement | S | Spalt |
| 15 | Dichtungsabschnitt | T | Dicke |
| 16 | Quellabschnitt | B | Flüssigkeit |
| 17 | zentrale Öffnung | | |

## Patentansprüche

1. Rohrverbindungssystem (1) umfassend
ein sich entlang einer Mittelachse (M) erstreckendes Rohr (2) mit einer eine Innenfläche (3) und eine Aussenfläche (4) aufweisenden Seitenwand (5), die einen Kanal (6) begrenzt, wobei in axialer Richtung die Seitenwand (5) durch Stirnflächen (7) begrenzt ist, und
ein sich entlang der Mittelachse (M) ersteckendes Fitting (8) mit einer eine Innenfläche (9) und eine Aussenfläche (10) aufweisenden Seitenwand (11), und einem von der Aussenfläche abstehenden Flansch (12), wobei die Innenfläche (9) einen sich durch den Fitting (8) erstreckenden Kanal (13) begrenzt,
wobei das Fitting (8) teilweise in das Rohr (2) hineinragt und wobei das Rohr (2) mit diesem Fitting (8) in Verbindung steht, wobei zwischen der Stirnfläche (7) des Rohres (2) und dem Flansch (12) des Fittings (8) ein Dichtungselement (14) angeordnet ist, wobei das Dichtungselement (14) einen Dichtungsabschnitt (15) und einen Quellabschnitt (16) umfasst, **dadurch gekennzeichnet, dass** der Dichtungsabschnitt (15) gegen die Stirnfläche (7) des Rohrs (2) gerichtet ist und aus einem bezüglich Fluiden undurchlässigen Material besteht, und dass der Quellabschnitt (16) gegen den Flansch (12) gerichtet ist und aus einem quellfähigen Material besteht, welches bei Kontakt mit einer Flüssigkeit (B) aufquellbar ist und durch das Aufquellen am Flansch (12) ansteht und eine Kraft (F) in Richtung der Mittelachse (M) auf den Dichtungsabschnitt (15) bereitstellt, so dass der Dichtungsabschnitt (15) gegen die Stirnfläche (7) des Rohrs (2) pressbar ist.

2. Rohrverbindungssystem nach Anspruch 1, **dadurch gekennzeichnet, dass** das Dichtungselement (14) einstückig aus dem Dichtungsabschnitt (15) und dem Quellabschnitt (16) ausgebildet ist.

3. Rohrverbindungssystem nach einem der vorhergehenden Ansprüche, **dadurch gekennzeichnet, dass** das Dichtungselement (14) als Dichtungsscheibe mit einer zentralen Öffnung (17) ausgebildet ist, wobei der Aussendurchmesser (D) der Dichtungsscheibe vorzugsweise gleich gross oder grösser ist, als der Aussendurchmesser (DR) des Rohrs (2) und wobei der Durchmesser der zentralen Öffnung (17) im Wesentlichen dem Durchmesser des Fittings (8) in dem Bereich, in welchem das Dichtungselement (14) angeordnet ist, entspricht.

4. Rohrverbindungssystem nach einem der vorhergehenden Ansprüche, **dadurch gekennzeichnet, dass** das Dichtungselement (14) eine Dicke (T) aufweist, welche kleiner oder gleich gross ist wie der minimale Spalt (S) zwischen Stirnfläche (7) des Rohrs (2) und Flansch (12).

5. Rohrverbindungssystem nach einem der vorhergehenden Ansprüche, **dadurch gekennzeichnet, dass** der Dichtungsabschnitt (15) in Richtung der Mittelachse (M) gesehen im Wesentlichen die gleiche Form bzw. Gestalt aufweist, wie die Stirnfläche (7) und die Stirnfläche (7) in Richtung der Mittelachse (M) gesehen vollständig durch den Dichtungsabschnitt (15) überdeckt ist.

6. Rohrverbindungssystem nach einem der vorhergehenden Ansprüche, **dadurch gekennzeichnet, dass** das Dichtungselement (14) mit einem Sicherungselement (18) gegen eine axiale Verschiebung in Richtung der Mittelachse (M) auf dem Fitting (8) gesichert ist.

7. Rohrverbindungssystem nach Anspruch 6, **dadurch gekennzeichnet, dass** das Sicherungselement (18) die Gestalt einer umlaufenden Nut aufweist, welche sich von der Aussenfläche (10) in die Seitenwand (11) des Fittings (8) hinein erstreckt.

8. Rohrverbindungssystem nach Anspruch 6, **dadurch gekennzeichnet, dass** das Sicherungselement (18) durch eine Klemmverbindung zwischen der Aussenfläche (10) des Fittings (8) und der Öffnung (17) im Dichtungselement (14) bereitgestellt wird, wobei der Durchmesser der Öffnung (17) im Dichtungselement (14) kleiner ist als der Durchmesser der Aussenfläche des Fittings (8) im entsprechenden Bereich.

9. Rohrverbindungssystem nach einem der vorhergehenden Ansprüche, **dadurch gekennzeichnet, dass** ein weiteres Dichtungselement (19) zwischen der Innenfläche (3) des Rohrs (2) und der Aussenfläche (10) des Fittings (8) vorgesehen ist, so dass der Ringspalt (20) zwischen besagter Innenfläche (3) und besagte Aussenfläche (10) bezüglich Fluiden abdichtbar ist.

10. Rohrverbindungssystem nach Anspruch 9, **dadurch gekennzeichnet, dass** das weitere Dichtungselement (19) in einer sich in das Fitting (8) erstreckende Nut (21) gelagert ist.

11. Rohrverbindungssystem nach Anspruch 9 oder 10, **dadurch gekennzeichnet, dass** das weitere Dichtungselement (19) die Gestalt eines O-Rings aufweist.

12. Rohrverbindungssystem nach einem der vorhergehenden Ansprüche, **dadurch gekennzeichnet, dass** das Rohr (2) zum Fitting (8) über eine Pressverbindung verbunden ist, oder dass das Rohr (2) zum Fitting (8) über eine Bride oder eine Presshülse verbunden ist.

13. Rohrverbindungssystem nach einem der vorhergehenden Ansprüche, **dadurch gekennzeichnet, dass** das Rohr (2) ein Verbundrohr mit metallischen Bestandteilen ist, wobei das Rohr (2) vorzugsweise eine innere Lage (22) aus Kunststoff, eine sich über die innere Lage erstreckende mittlere Lage (23) aus Metall und eine die mittlere Lage umgebende äussere Lage (24) aus Kunststoff umfasst.

14. Rohrverbindungssystem nach einem der vorhergehenden Ansprüche, **dadurch gekennzeichnet, dass** Dichtungsabschnitt (15) und Quellabschnitt (16) durch eine Ko-Extrusionsverfahren herstellbar sind.

15. Rohrverbindungssystem nach einem der vorhergehenden Ansprüche, **dadurch gekennzeichnet, dass** im ungequellten Zustand der Dichtungsabschnitt (15) eine Dicke aufweist, welche 50% bis 75%, besonders bevorzugt 66.6%, der gesamten Dicke (T) des Dichtungselementes (14) entspricht, und dass der Quellabschnitt eine Dicke aufweist, welche 25% bis 50%, besonders bevorzugt von 33.3%, der gesamten Dicke (T) des Dichtungselementes (14) entspricht.

## Claims

1. Pipe-connecting system (1) comprising a pipe (2), which extends along a centre axis (M) and has a side wall (5) which has an inner surface (3) and an outer surface (4) and bounds a channel (6), wherein the side wall (5) is bounded in the axial direction by end surfaces (7), and
a fitting (8), which extends along the centre axis (M) and has a side wall (11), having an inner surface (9) and an outer surface (10), and has a flange (12) projecting from the outer surface, wherein the inner surface (9) bounds a channel (13) extending through the fitting (8),
wherein the fitting (8) projects partially into the pipe (2), and wherein the pipe (2) is connected to said fitting (8), wherein a sealing element (14) is arranged between the end surface (7) of the pipe (2) and the flange (12) of the fitting (8), wherein the sealing element (14) comprises a sealing portion (15) and a swelling portion (16), **characterized in that** the sealing portion (15) is directed towards the end surface (7) of the pipe (2) and consists of a fluid-impermeable material, and **in that** the swelling portion (16) is directed towards the flange (12) and consists of a swellable material which can swell up upon contact with a liquid (B) and, by virtue of swelling up, is positioned against the flange (12) and applies a force (F) to the sealing portion (15) in the direction of the centre axis (M), and therefore the sealing portion (15) can be pressed against the end surface (7) of the pipe (2).

2. Pipe-connecting system according to Claim 1, **characterized in that** the sealing element (14) is formed in one piece from the sealing portion (15) and the swelling portion (16).

3. Pipe-connecting system according to one of the preceding claims, **characterized in that** the sealing element (14) is designed in the form of a sealing disc with a central opening (17), wherein the external diameter (D) of the sealing disc is preferably equal to, or greater than, the external diameter (DR) of the pipe (2), and wherein the diameter of the central opening (17) corresponds essentially to the diameter of the fitting (8) in the region in which the sealing element (14) is arranged.

4. Pipe-connecting system according to one of the preceding claims, **characterized in that** the sealing element (14) has a thickness (T) which is smaller than, or equal to, the minimal gap (S) between the end surface (7) of the pipe (2) and flange (12).

5. Pipe-connecting system according to one of the preceding claims, **characterized in that** the sealing portion (15), as seen in the direction of the centre axis (M), is of essentially the same form or configuration as the end surface (7) and the end surface (7), as seen in the direction of the centre axis (M), is covered over completely by the sealing portion (15).

6. Pipe-connecting system according to one of the preceding claims, **characterized in that** the sealing element (14) is secured on the fitting (8) against axial displacement in the direction of the centre axis (M) by a securing element (18).

7. Pipe-connecting system according to Claim 6, **characterized in that** the securing element (18) is configured in the form of an encircling groove which extends from the outer surface (10) into the side wall (11) of the fitting (8).

8. Pipe-connecting system according to Claim 6, **characterized in that** the securing element (18) is provided by a clamping connection between the outer surface (10) of the fitting (8) and the opening (17) in the sealing element (14), wherein the diameter of the opening (17) in the sealing element (14) is smaller than the diameter of the outer surface of the fitting (8) in the corresponding region.

9. Pipe-connecting system according to one of the preceding claims, **characterized in that** a further sealing element (19) is provided between the inner surface (3) of the pipe (2) and the outer surface (10) of the fitting (8), and therefore it is possible to seal the annular gap (20) between said inner surface (3) and said outer surface (10) in relation to fluids.

10. Pipe-connecting system according to Claim 9, **characterized in that** the further sealing element (19) is mounted in a groove (21) extending in the fitting (8).

11. Pipe-connecting system according to Claim 9 or 10, **characterized in that** the further sealing element (19) is configured in the form of an O-ring.

12. Pipe-connecting system according to one of the preceding claims, **characterized in that** the pipe (2) is connected to the fitting (8) via a press-fit connection, or **in that** the pipe (2) is connected to the fitting (8) via a clamp or a press-fit sleeve.

13. Pipe-connecting system according to one of the preceding claims, **characterized in that** the pipe (2) is a composite pipe with metallic constituent parts, wherein the pipe (2) preferably comprises an inner layer (22) made of plastics material, a central layer (23), extending over the inner layer, made of metal, and an outer layer (24), enclosing the central layer, made of plastics material.

14. Pipe-connecting system according to one of the preceding claims, **characterized in that** the sealing portion (15) and swelling portion (16) can be produced by coextrusion.

15. Pipe-connecting system according to one of the preceding claims, **characterized in that**, in the non-swollen state, the sealing portion (15) has a thickness which corresponds to 50% to 75%, particularly preferably 66.6%, of the overall thickness (T) of the sealing element (14), and **in that** the swelling portion has a thickness which corresponds to 25% to 50%, particularly preferably 33.3%, of the overall thickness (T) of the sealing element (14).

## Revendications

1. Système de raccordement de tuyau (1) comportant un tuyau (2) s'étendant le long d'un axe médian (M) et pourvu d'une paroi latérale (5) comprenant une surface intérieure (3) et une surface extérieure (4), laquelle paroi latérale délimite un canal (6), la paroi latérale (5) étant limitée par des surfaces frontales (7) dans la direction axiale, et
un raccord (8) s'étendant le long de l'axe médian (M) et pourvu d'une paroi latérale (11) comprenant une surface intérieure (9) et une surface extérieure (10), et d'une collerette (12) faisant saillie à partir de la surface extérieure, la surface intérieure (9) délimitant un canal (13) s'étendant à travers le raccord (8),
le raccord (8) pénétrant partiellement dans le tuyau (2) et le tuyau (2) étant relié à ce raccord (8), un élément d'étanchéité (14) étant disposé entre la surface frontale (7) du tuyau (2) et la collerette (12) du raccord (8), l'élément d'étanchéité (14) comportant une portion d'étanchéité (15) et une portion de gonflement (16), **caractérisé en ce que** la portion d'étanchéité (15) est orientée vers la surface frontale (7) du tuyau (2) et est constituée d'un matériau imperméable aux fluides, et **en ce que** la portion de gonflement (16) est orientée vers la collerette (12) et est constituée d'un matériau apte à gonfler, lequel peut gonfler lors du contact avec un liquide (B) et s'applique contre la collerette (12) en raison du gonflement et produit une force (F) sur la portion d'étanchéité (15) dans la direction de l'axe médian (M), de telle sorte que la portion d'étanchéité (15) puisse être pressée contre la surface frontale (7) du tuyau (2).

2. Système de raccordement de tuyau selon la revendication 1, **caractérisé en ce que** l'élément d'étanchéité (14) est réalisé d'une seule pièce à partir de la portion d'étanchéité (15) et de la portion de gonflement (16).

3. Système de raccordement de tuyau selon l'une quelconque des revendications précédentes, **caractérisé en ce que** l'élément d'étanchéité (14) est réalisé sous forme de disque d'étanchéité pourvu d'une ouverture centrale (17), le diamètre extérieur (D) du disque d'étanchéité étant de préférence supérieur ou égal au diamètre extérieur (DR) du tuyau (2), et le diamètre de l'ouverture centrale (17) correspondant essentiellement au diamètre du raccord (8) dans la région dans laquelle l'élément d'étanchéité (14) est disposé.

4. Système de raccordement de tuyau selon l'une quelconque des revendications précédentes, **caractérisé en ce que** l'élément d'étanchéité (14) présente une épaisseur (T) qui est inférieure ou égale à l'interstice minimal (S) entre la surface frontale (7) du tuyau (2) et la collerette (12).

5. Système de raccordement de tuyau selon l'une quelconque des revendications précédentes, **caractérisé en ce que** la portion d'étanchéité (15) présente, vue dans la direction de l'axe médian (M), essentiellement la même forme ou configuration que la surface frontale (7) et la surface frontale (7) est, vue dans la direction de l'axe médian (M), entièrement recouverte par la portion d'étanchéité (15).

6. Système de raccordement de tuyau selon l'une quelconque des revendications précédentes, **caractérisé en ce que** l'élément d'étanchéité (14) est fixé sur le raccord (8) de manière à empêcher un déplacement axial dans la direction de l'axe médian (M) à l'aide d'un élément de fixation (18).

7. Système de raccordement de tuyau selon la revendication 6, **caractérisé en ce que** l'élément de fixation (18) présente la configuration d'une rainure périphérique qui s'étend à partir de la surface extérieure (10) dans la paroi latérale (11) du raccord (8).

8. Système de raccordement de tuyau selon la revendication 6, **caractérisé en ce que** l'élément de fixation (18) est produit par une liaison de serrage entre la surface extérieure (10) du raccord (8) et l'ouverture (17) dans l'élément d'étanchéité (14), le diamètre de l'ouverture (17) dans l'élément d'étanchéité (14) étant inférieur au diamètre de la surface extérieure du raccord (8) dans la région correspondante.

9. Système de raccordement de tuyau selon l'une quelconque des revendications précédentes, **caractérisé en ce qu'**un élément d'étanchéité supplémentaire (19) est prévu entre la surface intérieure (3) du tuyau (2) et la surface extérieure (10) du raccord (8), de telle sorte que l'interstice annulaire (20) entre ladite surface intérieure (3) et ladite surface extérieure (10) puisse être rendu étanche aux fluides.

10. Système de raccordement de tuyau selon la revendication 9, **caractérisé en ce que** l'élément d'étanchéité supplémentaire (19) est monté dans une rainure (21) s'étendant dans le raccord (8).

11. Système de raccordement de tuyau selon la revendication 9 ou 10, **caractérisé en ce que** l'élément d'étanchéité supplémentaire (19) présente la configuration d'un joint torique.

12. Système de raccordement de tuyau selon l'une quelconque des revendications précédentes, **caractérisé en ce que** le tuyau (2) est relié au raccord (8) par le biais d'une liaison à ajustement serré, ou **en ce que** le tuyau (2) est relié au raccord (8) par le biais d'une bride ou d'une douille de pressage.

13. Système de raccordement de tuyau selon l'une quelconque des revendications précédentes, **caractérisé en ce que** le tuyau (2) est un tuyau composite pourvu de composants métalliques, le tuyau (2) comportant de préférence une couche intérieure (22) en plastique, une couche centrale (23) en métal s'étendant sur la couche intérieure et une couche extérieure (24) en plastique entourant la couche centrale.

14. Système de raccordement de tuyau selon l'une quelconque des revendications précédentes, **caractérisé en ce que** la portion d'étanchéité (15) et la portion de gonflement (16) peuvent être fabriquées au moyen d'un procédé de coextrusion.

15. Système de raccordement de tuyau selon l'une quelconque des revendications précédentes, **caractérisé en ce que** la portion d'étanchéité (15) présente, dans l'état non gonflé, une épaisseur qui correspond à 50 % à 75 %, de manière particulièrement préférée à 66,6 %, de l'épaisseur totale (T) de l'élément d'étanchéité (14), et **en ce que** la portion de gonflement présente une épaisseur qui correspond à 25 % à 50 %, de manière particulièrement préférée à 33,3 %, de l'épaisseur totale (T) de l'élément d'étanchéité (14).
